# EUROPÄISCHE PATENTANMELDUNG

(11) **EP 1 069 510 A2**
(43) Veröffentlichungstag der Anmeldung: **17.01.2001**
(21) Anmeldenummer: 00114624.0
(22) Anmeldetag: 07.07.2000
(51) Int. Cl.: G06F 13/40

(54) **Verfahren zur Aufnahme einer neuen Komponente in einem Bussystem**

(30) Priorität: 14.07.1999 DE 19932405
(71) Anmelder: GRUNDIG Aktiengesellschaft, 90471 Nürnberg (DE)
(72) Erfinder: Bienefeld, Axel, c/o GRUNDIG AG, 90762 Fürth (DE)

(57) **Zusammenfassung**

Die Erfindung betrifft ein Verfahren und eine Vorrichtung zur Aufnahme einer neuen Komponente in ein Bussystem. Bei diesem sind bereits vorhandene Komponenten an einen Bus angeschlossen. Eine der bereits vorhandenen Komponenten ist ein Systemmanager. Die neue Komponente sendet automatisch nach ihrem Anschluß an den Bus ein Anmeldesignal an den Systemmanager und übermittelt diesem weiterhin automatisch Informationen über ihren Befehlssatz.

## Beschreibung

Die Erfindung betrifft ein Verfahren zur Aufnahme einer neuen Komponente in ein Bussystem, bei welchem bereits vorhandene Komponenten an einen Bus angeschlossen sind und eine dieser bereits vorhandenen Komponenten ein Systemmanager ist.

Aus der EP-B-0 492 701 ist ein Videosignalverarbeitungssystem mit einer Vielzahl von Videosignalverarbeitungsvorrichtungen bekannt. Mindestens eine dieser Vorrichtungen enthält ein Hilfsmittel zur Umwandlung des Bildseitenverhältnisses von Videosignalen. Die Vorrichtungen sind so miteinander verbunden, daß von einer dieser Vorrichtungen als Quelle zu einer der Vorrichtungen als Ziel ein Videosignalweg besteht. Weiterhin weist das System eine Steuervorrichtung zum systematischen Abfragen aller Vorrichtungen auf dem Signalweg auf, um festzustellen, ob im Signalweg eine Umwandlung des Bildseitenverhältnisses erforderlich ist, und um wahlweise die oder jede einzelne Bildseitenverhältnis-Umwandlungseinrichtung ein- oder auszuschalten und eine so erforderliche Umwandlung zu bewirken.

Weiterhin ist aus der EP-B-0 505 006 ein lokales Bus-Kommunikationssystem mit einem seriellen Steuerbus bekannt, der mit einer Vielzahl von adressierbaren Geräten verbunden ist. Jedes dieser Geräte enthält mindestens ein funktionelles Element, das über den Bus als ein Teilgerät adressierbar ist. Die Teilgeräte enthalten ein Benutzerausgabe-Teilgerät zum Anzeigen von Statusinformationen von einem oder mehreren Geräten des Systems sowie ein erstes Steuerungsteilgerät zum Initiieren der Anzeige der Statusinformationen, wobei das erste Steuerungsteilgerät Mittel zum Erzeugen einer Geräteinformations-Anforderungsmeldung enthält, die an ein anderes Gerät adressiert wird als an jenes, das das erste Steuerungsteilgerät enthält. Das adressierte Gerät weist ein zweites Steuerungsteilgerät auf, das auf eine solche Anforderungsmeldung reagiert, um die gewünschten Statusinformationen zu bestimmen. Weiterhin sorgt das zweite Steuerungsteilgerät dafür, daß eine formatierte, benutzerlesbare Meldung zusammengestellt wird und daß diese Meldung unmittelbar oder über eine oder mehrere Steuerungsteilgeräte des Systems an das Benutzerausgabe-Teilgerät zur Anzeige gesendet wird. Dadurch ist es möglich, daß mittels des initiierenden Steuerungsteilgerätes sichergestellt wird, daß die Statusinformationen von einer Reihe von verschiedenen Geräten in einer kohärenten Weise angezeigt werden können, ohne daß Konflikte entstehen.

Ausgehend von diesem Stand der Technik liegt der Erfindung die Aufgabe zugrunde, einen Weg aufzuzeigen, wie neue Komponenten unterschiedlicher Leistungsfähigkeit ohne eine Treiberinstallation in ein Bussystem aufgenommen werden können.

Diese Aufgabe wird durch ein Verfahren mit den im Anspruch 1 angegebenen Merkmalen gelöst. Vorteilhafte Ausgestaltungen und Weiterbildungen der Erfindung sind in den Ansprüchen 2 bis 9 angegeben. Der Anspruch 10 betrifft eine Vorrichtung zur Durchführung des Verfahrens nach einem der Ansprüche 1 bis 9.

Ein Verfahren mit den erfindungsgemäßen Merkmalen ist in vorteilhafter Weise bei Bussystemen einsetzbar, die im Sinne des sog. Plug-and-Play-Gedankens arbeiten. Bei derartigen Systemen sind nach dem Verbinden einer neuen Komponente mit dem Bussystem keine weiteren benutzerseitigen Maßnahmen notwendig, um die neue Komponente innerhalb des Bussystems arbeitsfähig zu machen.

Weitere vorteilhafte Eigenschaften der Erfindung ergeben sich aus der Erläuterung von Ausführungsbeispielen anhand der Figuren.

Es zeigt:
- FIG 1: eine Blockschaltbild eines ringförmig organisierten Bussystems,
- FIG 2: ein Blockschaltbild eines sternförmig organisierten Bussystems, und
- FIG 3: eine Skizze einer als Systemmanager dienenden Bedienungseinheit.

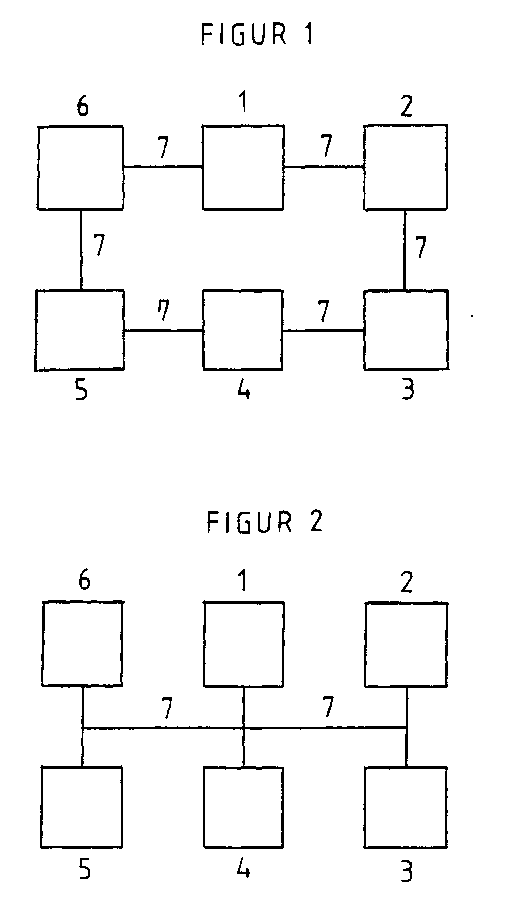

Die Figur 1 zeigt ein Blockschaltbild eines ringförmig organisierten Bussystems. An den Bus 7 sind Buskomponenten 1,2, 3, 4, 5, 6 angeschlossen. Die Buskomponente 1 nimmt die Aufgabe des Systemmanagers wahr. Bei der Buskomponente 2 handelt es sich um eine neu an den Bus angeschlossene Komponente. Die Komponenten 3, 4, 5, 6 sind vorhandene, bereits in das Bussystem aufgenommene Komponenten.

Die an den Bus angeschlossenen Komponenten sind video- und/oder audiosignalverarbeitende und/oder datenverarbeitende Geräte. Sie sind beispielsweise in einem Fahrzeug angeordnet. Es kann sich bei diesen Komponenten um einen Autoradio-Tuner, einen digitalen Hörrundfunkempfänger, einen CD-Wechsler, einen Fernsehtuner, einen Fernsehbildschirm, einen Kassettenrecorder, einen GPS-Empfänger, ein Navigationssystem, ein Gateway zu einem anderen Bussystem, eine Telefon, eine Spracheingabe-, eine Sprachausgabeeinheit, eine Freisprecheinrichtung und/oder einen DVD-Spieler handeln.

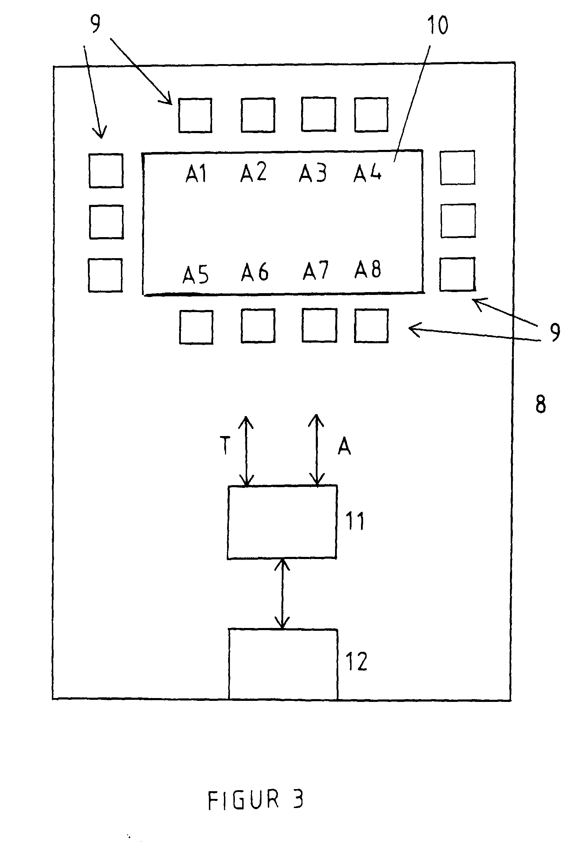

Die genannten Komponenten 1, 2, 3, 4, 5, 6 sind innerhalb des Fahrzeugs verteilt angeordnet und über den Bus 7 miteinander verbunden, bei welchem es sich vorzugsweise um einen optischen Bus handelt. Der Systemmanager 1 kann entweder ein eigens zu diesem Zweck vorgesehenes Steuergerät oder ein in ein Gerät integrierter Steuerbaustein sein. Beispielsweise kann - wie noch unten im Zusammenhang mit der Figur 3 erläutert wird - der Systemmanager in eine Bedieneinheit oder eine festinstallierte Display-Keyboard-Einheit (MMI) integriert sein.

Jeder der bereits vorhandenen, in das Bussystem aufgenommenen Komponenten 3, 4, 5, 6 wurde bereits vom Systemmanager 1 ein Übertragunszeitintervall, beispielsweise in Form von Zeitschlitzen, zugewiesen, die für eine Signalübertragung zwischen dem Systemmanager und der jeweiligen Komponente reserviert sind. Es ist aber auch möglich, daß jede Einheit bei Bedarf Buskapazität allozieren kann.

Ist die neue Komponente 2 an den Bus mechanisch angeschlossen, dann überträgt sie automatisch ein Anmeldesignal an den Systemmanager 1. Dadurch erhält der Systemmanager 1 eine Information darüber, daß an den Bus 7 eine weitere Komponente angeschlossen wurde.

Weiterhin übermittelt die neue Komponente zusätzlich zum Anmeldesignal auch Informationen über ihren Befehlssatz an den Systemmanager 1.

Bei einer ersten Ausführungsform für die Erfindung handelt es sich bei dem von der neuen Komponente 2 an den Systemmanager 1 übermittelten Befehlssatz um den gesamten Befehlssatz der neuen Komponente 2. Nach Erhalt dieses Befehlssatzes vergleicht der Systemmanager 1 den ihm bereits vorliegenden Befehlssatz mit dem neu erhaltenen Befehlssatz und ergänzt seinen eigenen Befehlssatz um diejenigen Befehle, die im bisher noch nicht angehörten.

Die nachfolgende Steuerung der neu aufgenommenen Komponente 2 erfolgt dann unter Berücksichtigung des gesamten Befehlssatzes der neuen Komponente. Dies wird der neuen Komponente 2 vom Systemmanager 1 mittels eines lnformationssignals mitgeteilt, welches vom Systemmanager 1 über den Bus 7 zur neuen Komponente 2 übertragen wird.

Weiterhin führt der Systemmanager 1 nach Erhalt des Befehlssatzes von der neuen Komponente 2 eine Neuberechnung der den einzeinen Komponenten zugeordneten Zeitschlitze durch, die für eine Informationsübertragung zwischen dem Systemmanager 1 und der jeweiligen Komponente 2, 3 , 4, 5, 6 reserviert sind. Auch diese Informationen werden vom Systemmanager 1 über den Bus 7 an die Komponenten des Bussystems übermittelt. Die für jede einzelne Komponente reservierte Zeitdauer der Zeitschlitze oder deren Anzahl ist nach dem Anschluß der neuen Komponente 2 natürlich geringer als vor dem Anschluß dieser neuen Komponente.

Gemäß einer Modifikation der ersten Ausführungsform für die Erfindung wird zwar ebenfalls der gesamte Befehlssatz der neuen Komponente 2 an den Systemmanager 1 übertragen, doch steuert der Systemmanager 1 die neue Komponente lediglich unter Berücksichtigung beiderseits vorhandener Befehle. Im übermittelten Befehlssatz enthaltene, im Systemmanager 1 vor der Übermittlung nicht vorhandene Befehle bleiben bei der Steuerung der neuen Komponente 2 unberücksichtigt. Es besteht aber auch hier die Möglichkeit, daß jede Komponente bedarfsmäßig Buskapazität alloziert.

Bei einer zweiten Ausführungsform für die Erfindung handelt es sich bei dem von der neuen Komponente 2 an den Systemmanager 1 übermittelten Befehlssatz lediglich um einen Befehlssatz, der über einen spezifizierten Standard-Befehlssatz hinausgehende Befehle aufweist. Bei dieser Ausführungsform ist es notwendig, von Anfang an für ein vorgegebenes Bussystem einen Standard-Befehlssatz zu definieren, den jede an den Bus angeschlossene Komponente im Sinne einer Mindestanforderung aufweisen muß.

Die über diesen Standard-Befehlssatz hinausgehenden Befehle werden dem Systemmanager 1 von der neuen Komponente 2 nach deren Anschluß und der Übermittlung des Anmeldesignals übermittelt. Der Systemmanager 1 ergänzt seinen eigenen Befehlssatz um die ihm von der neuen Komponente übermittelten zusätzlichen Befehle und führt die im nachfolgenden Betrieb stattfindende Steuerung der neuen Komponente 2 unter Berücksichtigung des gesamten Befehlssatzes durch, also unter Berücksichtigung des spezifizierten Standard-Befehlssatzes und des über diesen hinausgehenden übermittelten Befehlssatzes. Letzterer kann beispielsweise herstellerspezifische Sonderfunktionen umfassen.
Auch bei dieser Ausführungsform führt der Systemmanager 1 nach Erhalt des Befehlssatzes von der neuen Komponente 2 eine Neuberechnung der den einzelnen Komponenten 2, 3, 4, 5, 6 zugeordneten Zeitschlitze durch. Diese Informationen über die neu berechneten Zeitschlitze werden den genannten Komponenten über den Bus 7 übermittelt. Es besteht aber auch die Möglichkeit über die Selbstallozierung einer Komponente eine Übertragung im Burst-Mode durchzuführen (asynchrone Übertragung).

Ein Bussystem, welches nach den vorstehend beschriebenen Verfahren arbeitet, ist insbesondere bei sog. Plug-and-Play-Systemen verwendbar. Dabei können Komponenten mit unterschiedlichem Funktions- bzw. Leistungsumfang in ein Bussystem integriert werden. Diese Einbindung neuer Komponenten in ein vorliegendes Bussystem kann ohne die Notwendigkeit einer Treiberinstallation erfolgen. Beispielsweise sind in ein Autoradiosystem CD-Wechsler mit unterschiedlichem Funktionsumfang, Tuner mit unterschiedlichen Empfangseigenschaften (beispielsweise AM + FM oder AM+ FM+ DAB ) wahlfrei einsetzbar.

Ein Verfahren, wie es vorstehend im Zusammenhang mit der Figur 1 beschrieben wurde, ist nicht nur bei einer ringförmig organisierten Busstruktur, sondern auch bei Bussystemen mit sternförmiger Busstruktur anwendbar.

Ein Blockschaltbild eines derartigen sternförmig organisierten Bussystems ist in der Figur 2 gezeigt. Der Ablauf des Verfahrens zur Aufnahme der neuen Komponente 2 in ein aus den Komponenten 1, 3, 4, 5, 6 und den Bus 7 bestehenden Bussystems ist ebenso wie es bereits vorstehend im Zusammenhang mit der Figur 1 beschrieben wurde.

Bei dem in den Figuren 1 und 2 gezeigten Systemmanager 1 kann es sich beispielsweise um einen in eine Bedieneinheit integrierten Systemmanager handeln. Die Figur 3 zeigt eine Skizze einer derartigen als Systemmanager dienenden Bedieneinheit 8.

Diese weist eine optische Sende- und Empfangseinheit 12 auf, die zum Empfang von über den Bus 7 übertragenen Signalen und zur Aussendung von über den Bus 7 zu übertragenden Signalen dient. Die Sende- und Empfangseinheit ist mit einem ebenfalls im Gehäuse der Bedieneinheit 8 angeordneten Mikrocomputer 11 verbunden, der alle Rechen- und Steuervorgänge durchführt, die mit der Bedienfunktion und der Funktion als Systemmanager zusammenhängen.

Der Mikrocomputer 11 steht in Verbindung mit den Bedeinelementen 9 der Bedieneinheit 8 sowie einer Anzeigeeinheit 10, wie es durch die Pfeile T und A in der Figur 3 angedeutet ist. Jedem Bedienelement 9 ist auf der Anzeigeeinheit 10 ein Anzeigebereich A1, A2... zugeordnet.

Wird nach dem oben beschriebenen Verfahren eine neue Komponente in das Bussystem aufgenommen, dann sorgt der Mikrocomputer 11 bei Bedarf für eine automatische Umschaltung der mittels bestimmter Tasten der Tastatur 9 auslösbaren Funktionen. Die jeweils aktuelle Funktion, die mittels einer Taste auslösbar ist, wird in Form eines zugehörigen Symbols in dem der jeweiligen Taste zugehörigen Anzeigenbereich der Anzeigeeinheit 10 angezeigt.

Gemäß der vorstehend beschriebenen Erfindung können nach alledem in ein bestehendes Bussystem neue Komponenten aufgenommen werden, die sich selbst gegenüber dem Systemmanager identifizieren und diesem Informationen über ihren Befehlssatz und Funktionsumfang übermitteln. Als Reaktion auf diese Übermittlung führt der Systemmanager notwendige Anpassungen des Systems durch und läßt den an den Bus angeschlossenen Komponenten Informationen über diese Anpassungen zukommen. Um zusätzliche Befehle im Zusammenhang mit der neu aufgenommenen Komponente bedienerseitig eingeben zu können oder Funktionen zu nutzen, kann ein Fernbedienungsgeber als Systemmanager verwendet werden. Dieser weist bezüglich ihrer Funktion umschaltbare Tasten und ein Display auf. Jeder der Tasten ist ein bestimmter Bereich des Displays zugeordnet, in welchem die jeweils gültige Tastenfunktion angezeigt wird.

Bei dem im Zusammenhang mit dem beanspruchten Verfahren verwendeten Bus kann es sich um einen sog. Firewire-Bus handeln. Dieser zeichnet sich dadurch aus, daß er eine hohe Bandbreite aufweist und als serieller Bus nur eine geringe Anzahl von Leitungen hat.

## Patentansprüche

1. Verfahren zur Aufnahme einer neuen Komponente in ein Bussystem, bei welchem bereits mindestens eine Komponenten an einen Bus angeschlossen ist und eine dieser bereits vorhandenen Komponenten ein Systemmanager ist,
**dadurch gekennzeichnet,**
daß die neue Komponente (2) nach ihrem Anschluß an den Bus (7) automatisch ein Anmeldesignal an den Systemmanager (1) überträgt und diesem weiterhin automatisch Informationen über ihren Befehlssatz übermittelt.

2. Verfahren nach Anspruch 1,
**dadurch gekennzeichnet,**
daß der von der neuen Komponente (2) an den Systemmanager (1) übermittelte Befehlssatz der gesamte Befehlssatz der neuen Komponente ist und/oder daß der Systemmanager (1) nach der Übermittlung des Befehlssatzes die neue Komponente (2) unter Berücksichtigung deren gesamten Befehlssatzes steuert und/oder daß der Systemmanager (1) nach der Übermittlung des Befehlssatzes die neue Komponente (2) unter Berücksichtigung beiderseits vorhandener Befehle steuert und im übermittelten Befehlssatz enthaltene, im Systemmanager (1) vor der Übermittlung nicht vorhandene Befehle bei der Steuerung der neuen Komponente (2) unberücksichtigt läßt.

3. Verfahren nach Anspruch 1,
**dadurch gekennzeichnet,**
daß der von der neuen Komponente (2) an den Systemmanager (1) übermittelte Befehlssatz ein über einen spezifizierten Standard-Befehlssatz hinausgehender Befehlssatz ist und/oder daß der von der neuen Komponente (2) an den Systemmanager (1) übermittelte Befehlssatz herstellerspezifische Sonderfunktionen umfaßt.

4. Verfahren nach Anspruch 3,
**dadurch gekennzeichnet,**
daß der Systemmanager (1) nach der Übermittlung des Befehlssatzes die neue Komponente (2) unter Berücksichtigung des spezifizierten Standard-Befehlssatzes und des über diesen hinausgehenden übermittelten Befehlssatzes steuert.

5. Verfahren nach einem der vorhergehenden Ansprüche,
**dadurch gekennzeichnet,**
daß der Systemmanager (1) nach der Übermittlung des Befehlssatzes ein Informationssignal an die neue Komponente (2) übermittelt, welches Informationen über den vom Systemmanager (1) zur Steuerung der neuen Komponente (2) verwendeten Befehlssatz enthält.

6. Verfahren nach einem der vorhergehenden Ansprüche,
**dadurch gekennzeichnet,**
daß der Systemmanager (1) nach der Übermittlung des Befehlssatzes ein Informationssignal an alle an den Bus (7) angeschlossenen Komponenten (2, 3, 4, 5, 6) übermittelt, welches Informationen über den Komponenten jeweils zugeordnete Übertragunszeitintervalle oder zugeordnete Buskapazität enthält.

7. Verfahren nach einem der vorhergehenden Ansprüche,
**dadurch gekennzeichnet,**
daß die an den Bus (7) angeschlossenen Komponenten (1, 2, 3, 4, 5, 6) video- und/oder audiosignalverarbeitende und/oder datenverarbeitende Geräte sind.

8. Verfahren nach einem der vorhergehenden Ansprüche,
**dadurch gekennzeichnet,**
daß die an den Bus (7) angeschlossenen Komponenten (1, 2, 3, 4, 5, 6) in einem Fahrzeug angeordnet sind und/oder daß der Bus ein Firewire-Bus oder ein MOST-Bus ist.

9. Verfahren nach einem der vorhergehenden Ansprüche,
**dadurch gekennzeichnet,**
daß der Systemmanager (1) eine Bedieneinheit (8) ist, deren Mikrocomputer (11) nach der Übermittlung des Befehlssatzes eine Umschaltung von Tastenfunktionen der mittels der Tasten (9) der Bedieneinheit (8) auslösbaren Funktionen sowie eine zugehörige Umschaltung der in Anzeigebereichen (A1, A2...) eines Displays (10) der Bedieneinheit (8) angezeigten Tastenfunktionssymbole auslöst und/oder daß die Bedeineinheit (8) eine Fernbedienung oder ein fest installiertes Bedienteil ist

10. Vorrichtung zur Durchführung des Verfahrens nach einem der Ansprüche 1 bis 9.
